Europäisches Patentamt

European Patent Office

Office européen des brevets

(19)

(11) Publication number : **0 501 773 A1**

(12) # EUROPEAN PATENT APPLICATION

(21) Application number : **92301611.7**

(22) Date of filing : **26.02.92**

(51) Int. Cl.⁵ : **B29C 47/12**

(30) Priority : **27.02.91 JP 32919/91**

(43) Date of publication of application :
**02.09.92 Bulletin 92/36**

(84) Designated Contracting States :
**AT BE CH DE DK ES FR GB GR IT LI LU MC NL
PT SE**

(71) Applicant : **POLYPLASTICS CO. LTD.**
**3-13, Azuchicho, 2-chome**
**Chuo-Ku Osaka-shi Osaka 541 (JP)**

(72) Inventor : **Takigawa, Masatoshi**
**1243-2, Higashiyamadera, Yui-cho**
**Ihara-gun, Shizuoka (JP)**
Inventor : **Kondo, Katsuyoshi**
**3740-1, Denbou, Fuji-shi**
**Shizuoka (JP)**
Inventor : **Yamaguchi, Yoshikazu**
**27-6, Sakuragi-cho**
**Atami-shi, Shizuoka (JP)**

(74) Representative : **W.P. Thompson & Co.**
**Coopers Building, Church Street**
**Liverpool L1 3AB (GB)**

(54) **Resin molding die.**

(57)   The invention provides a resin molding die comprising a nozzle characterised by having a nose protruding from the face of the molding die.

( Figure 1 )

EP 0 501 773 A1

The present invention relates to a resin molding die. More particularly, the present invention is concerned with a resin molding die improved in the prevention of the occurrence and discoloration of resin gum and the like.

When a resin is extruded into a strand which is cut into pellets for molding, or when extrusion or blow molding is conducted through the use of molding pellets, use is made of a molding tie having a nozzle section in conformity with an intended product configuration.

Most of such molding dies have been ones made of a metal such as tool steel or SUS steel and having a nozzle with its nose substantially flush with the die face.

When a resin is molded through the use of such a die, however, an unfavorable phenomenon called "resin gum" occurs on the die face around the periphery of the nose of the nozzle and the resin gum discolors, thus spoiling the quality and appearance of the product. More precisely, although various stabilizers or additives are incorporated in the resin for various purposes, they are seldom completely compatible with the resin, so that when a molten resin flows out through the nose of the nozzle, part of the additives present on the surface of the resin separate from the resin, moves towards the surface of the die and gradually accumulates as a substance generally called "resin gum". Further, a decomposition product having a low molecular weight formed by the decomposition of the resin by the heat of molding often separates at the nose of the nozzle and deposits as a resin gum on the surface of the die. The resin gum formed on the surface of the die is deteriorated and discolored by the heat applied to the die, and the appearance of the product is remarkably deteriorated even when only a very small amount of the deteriorated and discolored resin gum adheres to the surface of the resin being discharged from the nozzle. The mass of the resin gum further grown on the surface of the die around the nose of the nozzle shortly peels off the surface of the die and adheres to the resin being discharged as a product through the nozzle, which brings about a further serious problem of the quality of the product.

[Brief Description of the Drawings]

Fig. 1 is a schematic cross-sectional view of one embodiment of the resin molding die according to the present invention.

Fig. 2 is a schematic sectional side elevation of another embodiment of the resin molding die according to the present invention.

Fig. 3 is a schematic front view of one embodiment of a structure of a protrusion of the nozzle in the resin molding die equipped with a plurality of nozzles.

Fig. 4 is a schematic front view of another embodiment of a structure of a protrusion of the nozzle in the resin molding die equipped with a plurality of nozzles.

[Description of Reference Numerals]

1: die body,
2: die face,
3: protrusion of nozzle,
4: nose of nozzle, and
5: nozzle tip.

The present inventors have made intensive studies with a view to solving the above-described problem and, as a result, have found that the occurrence of the resin gum can be remarkably prevented through the protrusion of the nose of the nozzle from the die face, which has led to the accomplishment of the present invention.

Accordingly, the present invention relates to a resin molding die comprising a nozzle having a nose protruding from the die face.

The present invention will now be described in more detail with reference to the accompanying drawings, though it is not limited to these embodiments only.

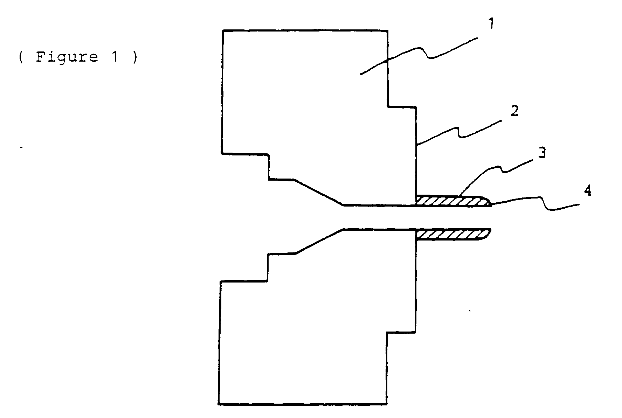

Fig. 1 is a schematic diagram showing one embodiment of a resin molding die of the present invention, wherein the die is made of metal as a whole. In the drawing, numeral 1 designates a die body, numeral 2 a die face, and numeral 3 a protrusion of a nozzle from the die face. The protrusion may be provided by any method wherein the die body and the protrusion are formed integrally with each other through the use of one and the same material, a method wherein only the protrusion is separately formed and fixed to a predetermined position of the die face by welding or the like, and a method wherein a nozzle tip formed so that a nozzle having a desired length can be protruded is fixed into a nozzle tip mounting hole in the die-head and fixed by welding or the like.

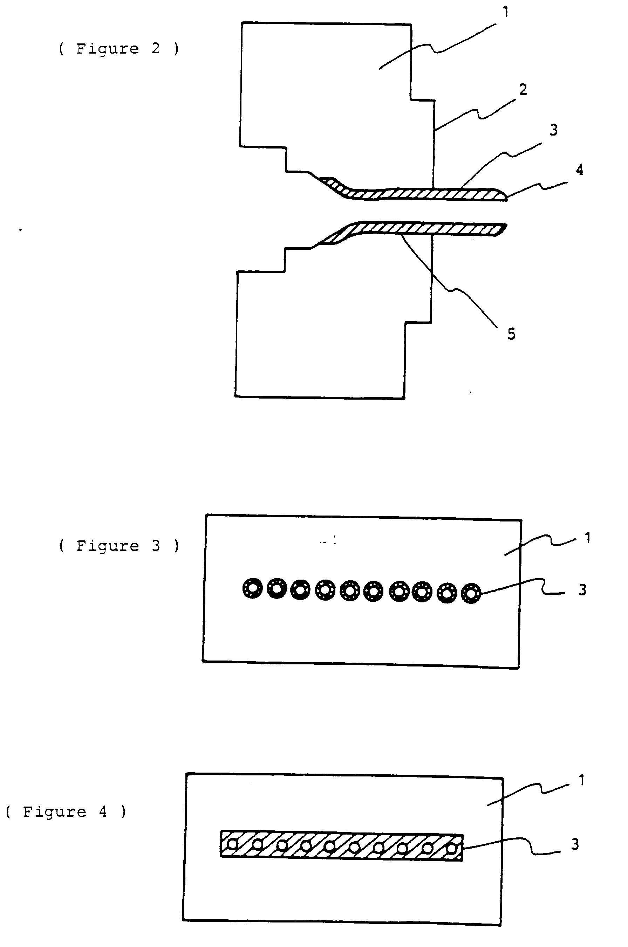

Fig. 3 is a schematic diagram showing another embodiment of the resin molding die according to the present invention. In this embodiment, the protrusion of the nozzle is made of ceramic. It is particularly preferred that the protrusion of the nozzle be made of ceramic because not only a further effect of preventing the occurrence and discoloration of the resin gum can be attained but also the abrasion resistance is excellent. The formation of the protrusion of the nozzle through the use of ceramic is preferably conducted by forming a ceramic nozzle tip having a length sufficient for protruding by a desired length from the die face as shown in Fig. 2 and provided with a nozzle hole for shaping a molten resin into a desired configuration, fitting the nozzle tip into a nozzle tip mounting hole provided in the die body, and fixing the nozzle tip by shrinkage fit or the like. The shrinkage fit is a fixation method taking advantage of a smaller coefficient of thermal expansion of ceramic than that of metal. For example, in the die according to the present invention, a firm joining can be attained by heating a metallic die body at a high temperature and press-fitting a ceramic nozzle tip into a nozzle tip mounting hole and cooling the resultant assembly. In the die formed by the shrinkage fit, the heating causes the shrinkage fit margin to be reduced due to a difference in the coefficient of thermal expansion between the metal and the ceramic, so that the fixing force of the nozzle tip becomes weak. In order to prevent the separation of the nozzle tip from the die body and the resin leakage even under these circumferences, it is preferred to shrinkage fit the nozzle tip from the inside of the die (on the side of resin inlet). Further, the structure is preferably such that the outside surface of the nozzle tip is partially tapered so that the nozzle tip is pressed against the die body by the pressure of the resin to thereby effect sealing. A suitable cushioning material layer may be provided between the die body and the nozzle tip. There is no particular limitation on the ceramic to be used, and use may be made of known ceramics, such as zirconia, silicon nitride, silicon carbide and alumina, or solid solutions mainly composed of these substances. Ceramics mainly composed of silicon nitride are particularly preferred by virtue of their excellent impact resistance. The nozzle tip is formed by sintering these ceramics.

In the resin molding dies of the present invention as shown in Figs. 1 or 2, the length of the protrusion of the nozzle from the die face is preferably 2 to 100 mm, particularly preferably 3 to 50 mm. In this case, a further improvement in the effect of preventing the occurrence of the resin gum and the discoloration of the resin gum formed though the amount is small.

In order to prevent the discoloration of the resin gum formed at the nose of the nozzle while maintaining sufficient fluidity of the resin through a suitable control of the heat conduction and heat radiation from the die body 1, the average wall thickness of the protrusion of the nozzle is preferably 1 to 10 mm. In order to prevent the occurrence of the resin gum, as shown in Figs. 1 and 2, the configuration of the nose of the nozzle is preferably such that the wall thickness at the nose is reduced to minimize the surface area of the nose, and particularly preferably such that the inverse ratio of the area ($S_1$) of an open zone at the nose of the nozzle to the area ($S_2$) of a non-open zone at the nose of the nozzle flush with the open zone, that is, $S_2/S_1$, is 2 or less. In the present invention, when the die is provided with a plurality of nozzles, the nozzle tip may be formed for each nozzle as shown in Fig. 3, or alternatively, one nozzle tip may be formed for two or more nozzles as shown in Fig. 4.

The resin molding die of the present invention has the above-described constitution and such a feature that the resin gum is less liable to occur and, even when it occurs, it is less liable to discolor. Further, when the protrusion of the nozzle is one made of ceramic, the die has a further feature of a long service life by virtue of its excellent abrasion and corrosion resistances, so that it can be widely applied as a molding die for various types of molding of a resin, such as the production of a molding pellet by extrusion, the extrusion of a rod, a pipe or the like, blow molding of a container or the like, pultrusion, wire covering, sheet molding and the inflation molding of film. There is no particular limitation on the types of resins useable in these molding, and use may be made of any of known thermoplastic resins and thermosetting resins (particularly prepolymers). In particular, the die of the present invention can sufficiently exhibit its features and a significant effect as compared with the conventional die when it is applied to applications where the resin gum is inherently liable to occur, the formed resin gum is liable to discolor or the die is liable to abrade, such as molding at a temperature of 150°C or above, the molding of a resin containing an additive having a poor compatibility, the molding of a blend of two or more resins, and the molding of a resin containing a large amount of an organic or inorganic filler, particularly a fibrous filler (1% by weight or more in the case of an organic filler and 10% by weight or more in the case of an inorganic filler). Further, a particularly significant effect can be observed also when the die of the present invention is applied to the molding of a resin mainly composed of one having high liabilities to discoloration upon being heated, to a significant discoloration of the resin gum caused around the nozzle and to the deterioration of the quality of the product, for example, a polyphenylene sulfide resin, a resin having a high crystallinity, a poor chemical activity and a very poor compatibility with many additives, for example, a polyacetal resin, and a polyester resin having a liability to deterioration due to hydrolysis or transesterification at high temperature.

As is apparent from the foregoing description, according to the resin molding die of the present invention wherein the nose of the nozzle protrudes from the die face, a remarkable improvement can be attained in solving problems such as the occurrence of the resin gum, the discoloration of the formed resin gum and the contamination of products with the resin gum during the molding of a resin. In particular, the die wherein the protrusion

EP 0 501 773 A1

of the nozzle from the die face is made from ceramic is not only further effective in solving the problems but also advantageous because of a prolonged service life of the die by virtue of its excellent abrasion and corrosion resistances, which renders the resin molding die of the present invention very valuable from the viewpoint of practical use.

[Examples]

The present invention will now be described in more detail with reference to the following Examples, though it is not limited to these Examples only.

(Examples 1 to 4 and Comparative Examples 1 and 2)

At the outset, dies to be used in Examples 1 to 4 and Comparative Examples 1 and 2 were prepared as follows. In each of the final dies, the nozzle diameter is 3 mm.

Dies to be used in Examples 1 and 3:

As shown in Fig. 1, the nose of a nozzle. of a metallic die protrudes by 9 mm from the die face. The protrusion of the nozzle has an average wall thickness of about 3 mm and a wall thickness reduced to 1 nm at its nose.

Dies to be used in Examples 2 and 4:

As shown in Fig. 2, a nozzle tip made of ceramic (silicon nitride) and having a nose formed so as to protrude by 9 mm from the surface of the die is mounted on a nozzle tip mounting hole of the metallic die body from the inner surface of the die by shrinkage fit. The nozzle tip has an average wall thickness of about 3 mm and a wall thickness reduced to 1 mm at its nose.

Dies to be used in Comparative Examples 1 and 2:

The whole of a die including a nozzle is made of metal, and the nose of the nozzle is formed so as to be flush with the surface of the die.

A mixture of 60% by weight of a polyphenylene sulfide resin (PPS) with 40% by weight of glass fibers (GF) in the case of Examples 1 and 2 and Comparative Example 1 and a mixture of 95% by weight of a polyacetal resin (POM) with 5% by weight of polyethylene (PE) in the case of Examples 3 and 4 and Comparative Example 2 were fed at a rate of 150 kg/hr and melt-kneaded on a double-screw extruder having an inner diameter of 63 mm and equipped with the above-described die, and shaped into a strand form.

The strand was drawn and pelletized.

In this case, evaluation was conducted by measuring the amount of a resin (resin gum) separated at the nose of the nozzle and adhered to the die and observing the discoloration of the resin gum with the elapse of time, the appearance of the pellet and the contamination of the product pellet with the resin gum. The results are given in Table 1.

4

[Table 1]

|  | Ex. 1 | Ex. 2 | Comp. Ex. 1 | Ex. 3 | Ex. 4 | Comp. Ex. 2 |
|---|---|---|---|---|---|---|
| Material and shape of die | nozzle nose protruding (metal) | nozzle nose protruding (silicon nitride) | nozzle nose not protruding | nozzle nose protruding (metal) | nozzle nose protruding (silicon nitride) | nozzle nose not protruding |
| Compsn. of extruding resin | PPS/GF | PPS/GF | PPS/GF | POM/PE | POM/PE | POM/PE |
| Amt. of separated resin (resin gum) (ppm) | 100 - 120 | 11 - 17 | 170 - 200 | 12 - 15 | 2 - 3 | 20 - 30 |
| Discoloration of separated resin (resin gum) | scarcely any* | scarcely any | significant | no | no | no |
| State of surface of pellet | smooth | relatively smooth | rough | smooth | smooth | uneven in some places |
| Contamination of product pellet with resin gum (number of resin gums per 5 kg of product) | small 3 - 5 | very small 0 - 1 | large 20 - 100 | very small** | very small** | slight** |

Note) *: because the formed resin gum easily peels off the nozzle nose and drops.

    **: no quantitative determination can be made due to contamination of the product with a very small resin gum.

EP 0 501 773 A1

**Claims**

1. A resin molding die comprising a nozzle characterised by having a nose protruding from the face of the molding die.

2. A resin molding die according to claim 1, characterised in that the nose of the nozzle protrudes by 2 to 100 mm from the die face.

3. A resin molding die according to claim 1 or 2, characterised in that the protrusion of the nozzle from the die face has an average wall thickness of 1 to 10mm.

4. A resin molding die according to claim 1, 2 or 3, characterised in that the inverse ratio of the area ($S_1$) of an open zone at the nose of the nozzle to the area ($S_2$) of a non-open zone at the nose of the nozzle flush with the open zone , i.e. $S_2/S_1$, is 2 or less.

5. A resin molding die according to any of claims 1 to 4, characterised in that the protrusion of the nozzle from the die face is one made of ceramic.

6. A resin molding die according to claim 5, characterised in that the protrusion of the nozzle from the die face is one formed by fitting and fixing a nozzle tip, which is made of ceramic, has a nose with a length capable of protruding from the die face and is provided with a nozzle hole for shaping a molten resin into a desired configuration, into a nozzle tip mounting hole provided in a metallic die body.

7. A resin molding die according to claim 6, wherein the nozzle tip is one fixed into the die body by shrinkage fit.

8. A method of molding a resin which is characterised by extruding a molten resin through a molding die claimed in any of claims 1 to 7.

9. A method according to claim 8, characterised in that molding is effected at a resin temperature of 150°C or above.

10. A method according to claim 8 or 9, characterised in that the resin is a thermoplastic resin containing an inorganic filler incorporated therein, or a thermoplastic resin containing a fibrous filler incorporated therein, or a thermoplastic resin containing an additive having a poor compatibility incorporated therein, or a resin mainly composed of a polyacetal resin, a polyester resin or a polyphenylene sulfide resin.

( Figure 1 )

( Figure 2 )

1

2

3

4

5

( Figure 3 )

1

3

( Figure 4 )

1

3

European Patent
Office

# EUROPEAN SEARCH REPORT

Application Number

| DOCUMENTS CONSIDERED TO BE RELEVANT | | | EP 92301611.7 |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | <u>AT - B - 249 988</u> (BASF) * Fig. 1 * | 1,2 | B 29 C 47/12 |
| A | | 3 | |
| A | <u>EP - A - 0 318 434</u> (SANICOLA) * Fig. 3 * | 1-3 | |
| A | <u>CH - A - 344 214</u> (IMPERIAL CHEMICAL INDUSTRIES) * Fig. * | 1,2 | |
| | | | TECHNICAL FIELDS SEARCHED (Int. Cl.5) |
| | | | B 29 C  B 29 D |

The present search report has been drawn up for all claims

| Place of search | Date of completion of the search | Examiner |
|---|---|---|
| VIENNA | 09-06-1992 | REININGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)